(19) Europäisches Patentamt
European Patent Office
Office européen des brevets

(11) EP 4 372 433 A1

(12) **EUROPEAN PATENT APPLICATION**
published in accordance with Art. 153(4) EPC

(43) Date of publication:
**22.05.2024 Bulletin 2024/21**

(21) Application number: **22841952.9**

(22) Date of filing: **29.06.2022**

(51) International Patent Classification (IPC):
***G02B 6/036*** *(2006.01)* ***C03C 13/04*** *(2006.01)*
***G02B 6/02*** *(2006.01)*

(52) Cooperative Patent Classification (CPC):
**C03C 13/04; G02B 6/02; G02B 6/036**

(86) International application number:
**PCT/JP2022/025961**

(87) International publication number:
**WO 2023/286608 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.07.2021 JP 2021117840**

(71) Applicant: **SUMITOMO ELECTRIC INDUSTRIES, LTD.**
**Osaka-shi, Osaka 541-0041 (JP)**

(72) Inventors:
- **SAKUMA Hirotaka**
  **Osaka-shi, Osaka 541-0041 (JP)**
- **KAWAGUCHI Yuki**
  **Osaka-shi, Osaka 541-0041 (JP)**
- **SATO Shin**
  **Osaka-shi, Osaka 541-0041 (JP)**

(74) Representative: **TBK**
**Bavariaring 4-6**
**80336 München (DE)**

## (54) OPTICAL FIBER AND OPTICAL FIBER BASE MATERIAL

(57) An optical fiber is made of silica-based glass. The optical fiber includes a core and a cladding circumscribing the core. A refractive index of the core is larger than a refractive index of the cladding. The core includes a first core having a central axis and a second core circumscribing the first core. A mean value of a mass fraction of chlorine in the first core is lower than a mean value of a mass fraction of chlorine in the second core. A mean value of a mass fraction of fluorine in the first core is higher than a mean value of a mass fraction of fluorine in the second core. A total value of the mean value of the mass fraction of chlorine and the mean value of the mass fraction of fluorine in the second core is 5000 ppm or less. The core includes either or both of an alkali metal element and an alkaline earth metal element.

*Fig.3*

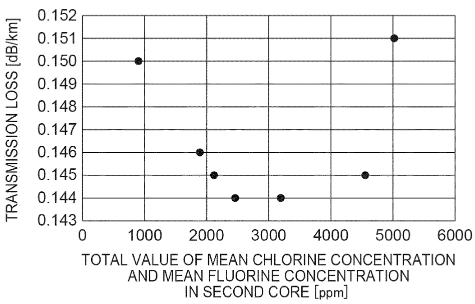


EP 4 372 433 A1

## Description

### Technical Field

The present disclosure relates to an optical fiber and an optical fiber preform. The present application claims priority to Japanese Patent Application No. 2021-117840 filed on July 16, 2021, and the entire contents of the Japanese patent application are incorporated herein by reference.

### Background Art

In general, when an optical fiber is manufactured by drawing an optical fiber preform in which a core formed of silica-based glass includes an alkali metal element or an alkaline earth metal element, viscosity of the core may be reduced and rearrangement of the glass may be promoted, so that transmission loss caused by Rayleigh scattering of the optical fiber is reduced. Hereinafter, both the alkali metal element and the alkaline earth metal element are referred to as an "alkali metal element group".

When chlorine is not included in a core including an alkali metal element group or when the content of chlorine is small, the alkali metal element group added to the central portion of the core in the state of an optical fiber preform is diffused during drawing, and at that time, the bond of the glass molecular structure is cut to generate glass defects. This causes an increase in transmission loss derived from glass defects. When the core includes a sufficient amount of chlorine, the alkali metal element group is bonded to glass defects by chlorine. As a result, the occurrence of glass defects is suppressed, and an increase in transmission loss derived from glass defects is reduced.

In order to reduce such an increase in transmission loss due to glass defects, the core of the optical fiber of the inventions disclosed in Patent Literatures 1 and 2 includes chlorine in addition to the alkali metal element group. In the optical fiber disclosed in Patent Literatures 1 and 2, when the core is divided into an inner core and an outer core, the chlorine concentration in the inner core is lower than the chlorine concentration in the outer core. By reducing the chlorine concentration in the inner core to which the alkali metal element group is to be added in this way, defects such as crystallization occurring at the time of preforming are reduced. It is considered that by increasing the chlorine concentration in the outer core, glass defects caused by diffusion of the alkali metal element group during drawing can be repaired, and an increase in transmission loss derived from glass defects can be suppressed.

### Citation List

### Patent Literature

Patent Literature 1: Japanese Unexamined Patent Publication No. 2009-541796
Patent Literature 2: Japanese Unexamined Patent Publication No. 2017-76053
Patent Literature 3: Japanese Unexamined Patent Publication No. 2019-191297

### Summary of Invention

An optical fiber according to an embodiment of the present disclosure is an optical fiber made of silica-based glass, including: a core; and a cladding circumscribing the core, in which a refractive index of the core is larger than a refractive index of the cladding, the core includes a first core having a central axis and a second core circumscribing the first core, a mean value of a mass fraction of chlorine in the first core is lower than a mean value of a mass fraction of chlorine in the second core, a mean value of a mass fraction of fluorine in the first core is higher than a mean value of a mass fraction of fluorine in the second core, a total value of the mean value of the mass fraction of chlorine and the mean value of the mass fraction of fluorine in the second core is 5000 ppm or less, and the core includes either or both of an alkali metal element and an alkaline earth metal element.

An optical fiber preform according to an embodiment of the present disclosure includes: a core portion; and a cladding portion circumscribing the core portion, in which a refractive index of the core portion is larger than a refractive index of the cladding portion, the core portion includes a first core portion having a central axis and a second core portion circumscribing the first core portion, a mean value of a mass fraction of chlorine in the first core portion is lower than a mean value of a mass fraction of chlorine in the second core portion, a mean value of a mass fraction of fluorine in the first core portion is higher than a mean value of a mass fraction of fluorine in the second core portion, a total value of the mean value of the mass fraction of chlorine and the mean value of the mass fraction of fluorine in the second core portion is 5000 ppm or less, and the core portion includes either or both of an alkali metal element and an alkaline earth metal element.

**Brief Description of Drawings**

FIG. 1 is a cross-sectional view of an optical fiber according to an embodiment.
FIG. 2 is a flowchart illustrating a method for manufacturing an optical fiber according to an embodiment.
FIG. 3 is a graph showing a relationship between a total value of a mean value of a mass fraction of chlorine and a mean value of a mass fraction of fluorine in a second core and transmission loss.
FIG. 4 is a graph showing a relationship between a difference between a mean fluorine concentration in a cladding and a mean fluorine concentration in the second core and transmission loss.
FIG. 5 is a graph showing a relationship between the mean value of the mass fraction of chlorine in the second core and transmission loss.
FIG. 6 is a graph showing a relationship between a mean potassium concentration of a core and transmission loss.

**Description of Embodiments**

[Problems to be Solved by the Present Disclosure]

In the optical fibers disclosed in Patent Literatures 1 and 2, since the chlorine concentration in the inner core is low, transmission loss is not sufficiently reduced. In the optical fibers disclosed in Patent Literatures 1 and 2, transmission loss is not sufficiently reduced with respect to the halogen concentrations in the inner core and the outer core.
An object of the present disclosure is to provide an optical fiber and an optical fiber preform that achieve both manufacturability and reduction in transmission loss.

[Effects of the Present Disclosure]

According to the present disclosure, it is possible to provide an optical fiber and an optical fiber preform that achieve both manufacturability and reduction in transmission loss.

[Description of Embodiments of the Present Disclosure]

Embodiments of the present disclosure are first listed and described. An optical fiber according to an embodiment of the present disclosure is an optical fiber made of silica-based glass, including: a core; and a cladding circumscribing the core, in which a refractive index of the core is larger than a refractive index of the cladding, the core includes a first core having a central axis and a second core circumscribing the first core, a mean value of a mass fraction of chlorine (hereinafter, referred to as "mean chlorine concentration") in the first core is lower than a mean chlorine concentration in the second core, a mean value of a mass fraction of fluorine (hereinafter, referred to as "mean fluorine concentration") in the first core is higher than a mean fluorine concentration in the second core, a total value of the mean chlorine concentration and the mean fluorine concentration in the second core is 5000 ppm or less, and the core includes either or both of an alkali metal element and an alkaline earth metal element. For example, when the mean chlorine concentration is 2000 ppm and the mean fluorine concentration is 2000 ppm, the total value of the mean chlorine concentration and the mean fluorine concentration is 4000 ppm.
In the optical fiber, both manufacturability and reduction in transmission loss can be achieved.
The mean chlorine concentration in the first core may be 10 ppm or greater and 500 ppm or less. In this case, both manufacturability and reduction in transmission loss can be easily achieved. When the mean chlorine concentration in the first core is less than 10 ppm, chlorine bonded to glass defects generated during drawing is insufficient, and the transmission loss increases. When the mean chlorine concentration in the first core is greater than 500 ppm, preform defects may occur due to reaction with an alkali metal element group during manufacturing of the preform.
The mean chlorine concentration in the second core may be 500 ppm or greater and 3000 ppm or less. In this case, both manufacturability and reduction in transmission loss can be easily achieved. When the mean chlorine concentration in the second core is less than 500 ppm, chlorine bonded to glass defects generated during drawing is insufficient, and the transmission loss increases. When the mean chlorine concentration in the second core is greater than 3000 ppm, although the second core does not include the alkali metal element group at the preform stage, a preform defect may occur due to reaction with the alkali metal element group due to diffusion during manufacturing of the preform.
The mean fluorine concentration in the first core may be 500 ppm or greater and 4000 ppm or less. In this case, both manufacturability and reduction in transmission loss can be easily achieved. When the mean fluorine concentration in the first core is less than 500 ppm, reduction of Rayleigh scattering loss due to viscosity reduction is insufficient, and the transmission loss increases. When the mean fluorine concentration in the first core is greater than 4000 ppm, the transmission loss increases due to concentration fluctuation.

The mean fluorine concentration in the second core may be 500 ppm or greater and 4000 ppm or less. In this case, both manufacturability and reduction in transmission loss can be easily achieved. When the mean fluorine concentration in the second core is less than 500 ppm, reduction of Rayleigh scattering loss due to viscosity reduction is insufficient, and the transmission loss increases. When the mean fluorine concentration in the second core is greater than 4000 ppm, the transmission loss increases due to concentration fluctuation. By adding fluorine to the second core, the viscosity of the core decreases as compared with the case of using chlorine alone, and the transmission loss caused by Rayleigh scattering can be reduced.

The total mean value of mass fractions (hereinafter, referred to as "mean concentration") of the alkali metal element and the alkaline earth metal element in the core may be 0.2 ppm or greater and 200 ppm or less. In this case, both manufacturability and reduction in transmission loss can be easily achieved. When the mean concentration is less than 0.2 ppm, reduction of Rayleigh scattering loss due to viscosity reduction is insufficient, and the transmission loss increases. When the mean concentration is greater than 200 ppm, the transmission loss increases due to concentration fluctuation.

The mean concentration of the alkali metal element and the alkaline earth metal element in the core may be 30 ppm or greater. In this case, both manufacturability and reduction in transmission loss can be more easily achieved.

The core may include any one of sodium, potassium, rubidium, cesium, and calcium as the alkali metal element or the alkaline earth metal element. In this case, reduction in transmission loss can be easily realized.

In the optical fiber of the present disclosure with sufficiently reduced transmission loss, the transmission loss is not deteriorated even under radiation. That is, the transmission loss can be reduced even without an OD group. When the chlorine concentration is high, glass defects are suppressed, and such transmission loss can be reduced.

A difference between a mean value of a mass fraction of fluorine in the cladding and the mean value of the mass fraction of fluorine in the second core may be 8400 ppm or greater. In this case, transmission loss can be further reduced.

The difference between the mean value of the mass fraction of fluorine in the cladding and the mean value of the mass fraction of fluorine in the second core may be 8600 ppm or greater and 9000 ppm or less. In this case, transmission loss can be suppressed.

The mean value of the mass fraction of fluorine in the cladding may be 8000 ppm or greater and 13000 ppm or less. In this case, transmission loss can be further reduced.

An optical fiber preform according to an embodiment of the present disclosure includes: a core portion; and a cladding portion circumscribing the core portion, in which a refractive index of the core portion is larger than a refractive index of the cladding portion, the core portion includes a first core portion having a central axis and a second core portion circumscribing the first core portion, a mean chlorine concentration in the first core portion is lower than a mean chlorine concentration in the second core portion, a mean fluorine concentration in the first core portion is higher than a mean fluorine concentration in the second core portion, a total value of the mean chlorine concentration and the mean fluorine concentration in the second core portion is 5000 ppm or less, and the core portion includes either or both of an alkali metal element and an alkaline earth metal element.

In the optical fiber preform, both manufacturability of the optical fiber and reduction in transmission loss can be achieved.

The mean concentration of chlorine in the first core portion may be 1000 ppm or less. In this case, the occurrence of preform abnormality can be suppressed. Here, the preform abnormality refers to a portion where a part of glass such as the core portion is crystallized.

The mean concentration of fluorine in the first core portion may be 5000 ppm or less. In this case, the occurrence of preform abnormality can be suppressed.

[Detailed Description of Embodiments of the Present Disclosure]

Specific examples of the optical fiber and the optical fiber preform of the present disclosure will be described below with reference to the drawings. It should be noted that the present invention is not limited to these examples, but is indicated by the scope of the claims and is intended to include all modifications within the meaning and scope equivalent to the scope of the claims. In the description of the drawings, the same elements are denoted by the same reference numerals, and redundant description will be omitted.

FIG. 1 is a cross-sectional view of an optical fiber according to an embodiment. An optical fiber 1 is made of silica-based glass. Optical fiber 1 includes a core 10 and a cladding 20. Core 10 has a central axis C of optical fiber 1. Cladding 20 surrounds core 10 and circumscribes core 10. The refractive index of core 10 is larger than the refractive index of cladding 20.

Core 10 includes a first core 11 and a second core 12. First core 11 has central axis C. Second core 12 surrounds first core 11 and circumscribes first core 11. Cladding 20 includes a first cladding and a second cladding (not illustrated). The first cladding surrounds core 10 and circumscribes core 10. The second cladding surrounds the first cladding and circumscribes the first cladding.

Core 10 includes chlorine, fluorine, and an alkali metal element group. The mean chlorine concentration in first core 11 is 10 ppm or greater and 500 ppm or less. The mean chlorine concentration in second core 12 is 500 ppm or greater and 3000 ppm or less. The mean chlorine concentration in first core 11 is lower than the mean chlorine concentration in second core 12. The mean fluorine concentration in first core 11 is 500 ppm or greater and 4000 ppm or less. The mean fluorine concentration in second core 12 is 500 ppm or greater and 4000 ppm or less. The mean fluorine concentration in first core 11 is higher than the mean fluorine concentration in second core 12. The total value of the mean chlorine concentration and the mean fluorine concentration in second core 12 is 5000 ppm or less.

Core 10 includes the alkali metal element group. The mean concentration of the alkali metal element group in core 10 is 0.2 ppm or greater and 200 ppm or less. Core 10 includes any one of sodium, potassium, rubidium, cesium, and calcium as the alkali metal element or the alkaline earth metal element.

Optical fiber 1 is manufactured by drawing the optical fiber preform according to an embodiment. The optical fiber preform is made of silica-based glass. The optical fiber preform includes a core portion serving as core 10 and a cladding portion serving as cladding 20. The core portion has a central axis of the optical fiber preform corresponding to central axis C. The cladding portion surrounds the core portion and circumscribes the core portion. A refractive index of the core portion is larger than a refractive index of the cladding portion.

The core portion includes a first core portion serving as first core 11 and a second core portion serving as second core 12. The first core portion has central axis C. The second core portion surrounds the first core portion and circumscribes the first core portion. The cladding portion includes a first cladding portion serving as the first cladding and a second cladding portion serving as the second cladding. The first cladding portion surrounds the core portion and circumscribes the core portion. The second cladding portion surrounds the first cladding portion and circumscribes the first cladding portion. Since the type and concentration of the dopant in the optical fiber preform correspond to the type and concentration of the dopant in optical fiber 1, detailed description thereof will be omitted. The alkali metal element group is added to the first core portion and diffuses during drawing.

FIG. 2 is a flowchart illustrating a method for manufacturing an optical fiber according to an embodiment. It should be noted that, in the following description, an example of specific conditions is also described. Optical fiber 1 is manufactured by sequentially performing a preparation process S1, an addition process S2, a diameter reduction process S3, an etching process S4, a solidification process S5, a first stretching and grinding process S6, a first rod-in collapse process S7, a second stretching and grinding process S8, a second rod-in collapse process S9, an OVD process S10, and a drawing process S11. The method for manufacturing optical fiber 1 includes these processes S1 to S11. The method for manufacturing the optical fiber preform includes these processes S1 to S10.

In the preparation process S1, a first core pipe and a second core pipe are prepared. The first core pipe is a glass pipe made of silica-based glass and becomes first core 11 through the first core portion. The first core pipe is prepared as a glass pipe for diffusing a dopant such as an alkali metal element. A silica-based glass cylindrical body as the base of the first core pipe includes 10 ppm or greater and 500 ppm or less of chlorine and 500 ppm or greater and 4000 ppm or less of fluorine. The concentration of other dopants and impurities is 10 ppm or less. An outer diameter of the first core pipe is 30 mm or more and 40 mm or less. An inner diameter is 15 mm or more and 25 mm or less.

The method for measuring the chlorine concentration is, for example, as follows. An end face of optical fiber 1 perpendicular to the fiber axis (central axis C) is polished, and the chlorine concentration is measured by an electron probe micro analyzer (EPMA) at each position along a straight line passing through the central position of the end face of the optical fiber. The conditions of measurement by EPMA are, for example, acceleration voltage of 20 kV, probe beam diameter of 1 $\mu$m or less, and measurement interval of 100 nm or less. The same applies to a method for measuring concentrations of other elements.

The mean value of the mass fraction (mean concentration) described in the present specification is, for example, a concentration represented by the following equation (1) in the case of a mean fluorine concentration of the silica-based glass cylindrical body. F(r) represents a fluorine concentration at a position of a radius r. c represents a radius of the silica-based glass cylindrical body. As in the case of optical fiber 1, the concentration is measured by, for example, EPMA, but the measurement concentrations may be different from those in the case of optical fiber 1. There is no problem as long as the concentration is calculated using the calibration curve under respective conditions.

[Formula 1]

$$\frac{2\int_0^c F(r)\cdot r\cdot dr}{c^2} \quad (1)$$

The second core pipe is a glass pipe made of silica-based glass and becomes second core 12 through the second core portion. An outer diameter of the second core pipe is 40 mm or more and 90 mm or less. An inner diameter of the second core pipe is 15 mm or more and 30 mm or less.

In the present embodiment, the preparation process S1 is performed before the addition process S2, but the second core pipe may be prepared before the first rod-in collapse process S7. That is, the preparation process S1 may include a first core pipe preparation process performed before the addition process S2 and a second core pipe preparation process performed before the second rod-in collapse process S7.

In the addition process S2, a potassium (K) element is added to the inner surface of the first core pipe as a dopant of the alkali metal element group. As a raw material, 6 g or more and 10 g or less of potassium bromide (KBr) is used. This raw material is heated to a temperature of 750°C or more and 850°C or less by an external heat source to generate raw material vapor. While the raw material vapor is introduced into the first core pipe together with a carrier gas composed of oxygen at a flow rate of 1 SLM or more and 3 SLM or less (1 liter/min or more and 3 liter/min or less in terms of standard conditions), the first core pipe is heated by an oxyhydrogen burner from the outside such that the outer surface of the first core pipe has a temperature of 1600°C or more and 1800°C or less. At this time, the heating is performed by traversing the burner at a speed of 30 mm/min or more and 60 mm/min or less in a total of 10 or more and 15 turns or less so that the K element is diffused and added to the inner surface of the first core pipe.

In the diameter reduction process S3, the diameter of the first core pipe to which K is added is reduced. At this time, the first core pipe is heated by the external heat source so that the outer surface of the first core pipe becomes 2000°C or more and 2300°C or less while flowing oxygen into the first core pipe in a range of 0.5 SLM or more and 1.0 SLM or less. The heating is performed by traversing the external heat source in a total of 6 turns or more and 10 turns or less so that the diameter of the first core pipe is reduced until the inner diameter thereof becomes 3 mm or more and 6 mm or less.

In the etching process S4, the inner surface of the first core pipe is etched. At this time, vapor phase etching is performed by heating the first core pipe by the external heat source while a mixed gas of $SF_6$ (0.2 SLM or more and 0.4 SLM or less) and chlorine (0.5 SLM or more and 1.0 SLM or less) is introduced into the first core pipe. In this way, the inner surface of the first core pipe containing impurities added together with the target dopant at a high concentration can be scraped, and the impurities can be removed.

In the solidification process S5, the first core pipe is solidified. In the solidification process S5, a mixed gas of oxygen (0.1 SLM or more and 0.5 SLM or less) and He (0.5 SLM or more and 1.0 SLM or less) is introduced into the first core pipe, and the first core pipe is solidified by setting the surface temperature to 2000°C or more and 2300°C while reducing the absolute pressure in the first core pipe to 97 kPa or less. By this solidification, a first core portion (a diameter of 20 mm or more and 30 mm or less) is obtained.

In the first stretching and grinding process S6, the first core portion is stretched to have a diameter of 20 mm or more and 30 mm or less, and the outer peripheral portion of the first core portion is ground to have a diameter of 15 mm or more and 25 mm or less.

In the first rod-in collapse process S7, the first core portion obtained up to the first stretching and grinding process S6 is used as a rod, and the second core pipe prepared in the preparation process S1 is used as a pipe to perform rod-in collapse. According to this rod-in collapse method, the first core portion and the second core pipe are heated and integrated by the external heat source. As a result, the second core portion is formed around the first core portion. As a result, a core portion (a diameter of 20 mm or more and 90 mm or less) is obtained.

In the second stretching and grinding process S8, the core portion is stretched to have a diameter of 20 mm or more and 35 mm or less, and the outer peripheral portion of the core portion is ground to have a diameter of 15 mm or more and 25 mm or less.

In the second rod-in collapse process S9, the core portion obtained up to the second stretching and grinding process S8 is used as a rod, and a silica-based glass pipe to which fluorine is added is used as a pipe to perform rod-in collapse. According to this rod-in collapse method, the core portion and the silica-based glass pipe to which fluorine is added are heated and integrated by the external heat source. As a result, the first cladding portion is formed around the core portion. A difference in relative refractive index between the core portion and the first cladding portion is about 0.34% at the maximum. As a result of the synthesis by the rod-in-collapse method, it is possible to suppress the amount of the OH group in the core portion and the first cladding portion in the vicinity thereof to be sufficiently low.

In the OVD process S10, first, a rod in which the core portion and the first cladding portion are integrated is stretched to have a predetermined radius. Subsequently, the second cladding portion including fluorine on the outside of the rod having a predetermined radius is synthesized by an OVD method. As a result, an optical fiber preform is manufactured.

In the drawing process S11, optical fiber 1 is manufactured by drawing the optical fiber preform manufactured by the method for manufacturing the optical fiber preform described above. The drawing speed is 1800 m/min or more and 2300 m/min or less. The drawing tension is, for example, 0.5 N.

Table 1 is a table summarizing specifications of seven types of optical fibers manufactured and evaluated. This table shows, for each of Fibers 1 to 7, the mean K concentration in the core, the transmission loss ($\alpha$1.55) at a wavelength of 1550 nm, the core diameter, the cut-off wavelength ($\lambda$cc), the effective cross-sectional area (Aeff), the mean chlorine concentration in the first core, the mean chlorine concentration in the second core, the mean fluorine concentration in the first core, the mean fluorine concentration in the second core, the sum of the mean chlorine concentration and the mean fluorine concentration in the second core, the mean fluorine concentration in the cladding, and the difference between the mean fluorine concentration in the cladding and the mean fluorine concentration in the second core. Here, the cladding refers to the entire cladding including the first cladding and the second cladding. The various concentrations in the present specification are not concentrations in the optical fiber but concentrations in the glass pipes serving as the first core and the second core after manufacturing. However, the concentration in the optical fiber can also be acquired. A boundary between the first core and the second core in the optical fiber is a place where the inclination between the points in the radial direction of the chlorine concentration is the largest in the core. However, depending on the measurement conditions of EPMA, the concentration has noise. In this case, the place of the boundary between the first core and the second core can be calculated after the noise is suppressed using the moving average of the plurality of points.

[Table 1]

| | Mean K concentration in core [ppm] | $\alpha$1.55 [dB/km] | Core diameter [$\mu$m] | $\lambda$cc [nm] | Aeff [$\mu m^2$] | Mean Cl concentration in first core [ppm] | Mean Cl concentration in second core [ppm] | Mean F concentration in first core [ppm] | Mean F concentration in second core [ppm] | Mean Cl concentration + mean F concentration in second core [ppm] | Mean F concentration in cladding [ppm] | Mean F concentration in cladding - mean F concentration in second core [ppm] |
|---|---|---|---|---|---|---|---|---|---|---|---|---|
| Fiber 1 | 44 | 0.151 | 11.1 | 1471 | 112 | 123 | 1007 | 2566 | 4023 | 5030 | 12300 | 8277 |
| Fiber 2 | 42 | 0.145 | 11.2 | 1484 | 112 | 122 | 1011 | 2501 | 3552 | 4563 | 12100 | 8578 |
| Fiber 3 | 40 | 0.144 | 11.1 | 1507 | 112 | 123 | 1099 | 2565 | 2107 | 3206 | 11090 | 8983 |
| Fiber 4 | 44 | 0.144 | 11.3 | 1515 | 112 | 126 | 1057 | 2526 | 1404 | 2461 | 10010 | 8606 |
| Fiber 5 | 40 | 0.145 | 11.6 | 1475 | 112 | 130 | 1075 | 2582 | 1043 | 2118 | 9560 | 8517 |
| Fiber 6 | 44 | 0.146 | 11.3 | 1508 | 110 | 120 | 1007 | 2555 | 883 | 1890 | 9320 | 8437 |
| Fiber 7 | 41 | 0.150 | 11.1 | 1471 | 110 | 128 | 680 | 2583 | 220 | 900 | 8520 | 8300 |

FIG. 3 is a graph showing a relationship between a total value of a mean chlorine concentration and a mean fluorine concentration in a second core and transmission loss. The horizontal axis indicates the total value of the mean chlorine concentration and the mean fluorine concentration in the second core. The vertical axis indicates transmission loss at a wavelength of 1550 nm. When the total value is less than 1000 ppm, the transmission loss increases. This is considered to be because the viscosity of the second core portion increases and the density fluctuation component of the Rayleigh scattering loss increases as the chlorine concentration and the fluorine concentration decrease. On the other hand, when the total value is about 5000 ppm, the transmission loss increases. This is considered to be because an increase in the concentration fluctuation component of the Rayleigh scattering loss is larger than a reduction in the density fluctuation component of the Rayleigh scattering loss due to a reduction in viscosity as the chlorine concentration and the fluorine concentration increase.

FIG. 4 is a graph showing a relationship between a difference between a mean fluorine concentration in a cladding and a mean fluorine concentration in the second core and transmission loss. The horizontal axis indicates the difference between the mean fluorine concentration in the cladding and the mean fluorine concentration in the second core. The vertical axis indicates transmission loss at a wavelength of 1550 nm. As shown in FIG. 4, the larger the difference between the mean fluorine concentration in the cladding and the mean fluorine concentration in the second core, the smaller the transmission loss. This is considered to be because as a difference in refractive index between the core and the cladding, even in the case of the same effective cross-sectional area (Aeff), the power distribution of light tends to concentrate on the core having a low Rayleigh scattering loss.

Table 2 is a table summarizing specifications of eight types of optical fibers manufactured and evaluated. This table shows, for each of Fibers 8 to 15, the mean K concentration in the core, the transmission loss ($\alpha$1.55) at a wavelength of 1550 nm, the core diameter, the cut-off wavelength ($\lambda$cc), the effective cross-sectional area (Aeff), the mean chlorine concentration in the first core, the mean chlorine concentration in the second core, the mean fluorine concentration in the first core, and the mean fluorine concentration in the second core.

[Table 2]

| | Mean K concentration in core [ppm] | $\alpha$ 1.55 [dB/km] | Core diameter [$\mu$m] | $\lambda$cc [nm] | Aeff [$\mu m^2$] | Mean Cl concentration in first core [ppm] | Mean Cl concentration in second core [ppm] | Mean F concentration in first core [ppm] | Mean F concentration in second core [ppm] |
|---|---|---|---|---|---|---|---|---|---|
| Fiber 8 | 43 | 0.150 | 11.6 | 1511 | 114 | 129 | 5010 | 2559 | 2046 |
| Fiber 9 | 43 | 0.147 | 11.1 | 1476 | 115 | 130 | 3047 | 2596 | 2062 |
| Fiber 10 | 41 | 0.146 | 11.3 | 1502 | 113 | 122 | 2540 | 2545 | 2079 |
| Fiber 11 | 43 | 0.145 | 11.5 | 1508 | 114 | 128 | 2019 | 2596 | 2026 |
| Fiber 12 | 43 | 0.144 | 11.5 | 1516 | 112 | 124 | 1095 | 2507 | 2036 |
| Fiber 13 | 43 | 0.144 | 11.4 | 1484 | 111 | 123 | 627 | 2550 | 2098 |
| Fiber 14 | 42 | 0.148 | 11.2 | 1472 | 113 | 124 | 290 | 2573 | 2060 |
| Fiber 15 | 40 | 0.150 | 11.6 | 1515 | 113 | 127 | 80 | 2568 | 2016 |

FIG. 5 is a graph showing a relationship between the mean chlorine concentration in the second core and transmission loss. The horizontal axis indicates the mean chlorine concentration in the second core. The vertical axis indicates transmission loss at a wavelength of 1550 nm. When the mean chlorine concentration in the second core is less than 300 ppm, the transmission loss increases. This is considered to be because glass defects cannot be completely repaired due to a decrease in chlorine concentration, and an increase in transmission loss derived from glass defects occurs. On the other hand, when the mean chlorine concentration in the second core is about 5000 ppm, the transmission loss increases. This is considered to be because the concentration fluctuation component of the Rayleigh scattering loss increases.

Table 3 is a table summarizing specifications of eight types of optical fibers manufactured and evaluated. This table shows, for each of Fibers 16 to 23, the mean K concentration in the core, the transmission loss ($\alpha$1.55) at a wavelength of 1550 nm, the core diameter, the cut-off wavelength ($\lambda$cc), the effective cross-sectional area (Aeff), the mean chlorine concentration in the first core, the mean chlorine concentration in the second core, the mean fluorine concentration in the first core, and the mean fluorine concentration in the second core.

[Table 3]

| | Mean K concentration in core [ppm] | $\alpha$1.55 [dB/km] | Core diameter [$\mu$m] | $\lambda$cc [nm] | Aeff [$\mu m^2$] | Mean Cl concentration in first core [ppm] | Mean Cl concentration in second core [ppm] | Mean F concentration in first core [ppm] | Mean F concentration in second core [ppm] |
|---|---|---|---|---|---|---|---|---|---|
| Fiber 16 | 10 | 0.150 | 11.0 | 1491 | 111 | 123 | 1012 | 2566 | 2056 |
| Fiber 17 | 22 | 0.147 | 11.1 | 1507 | 113 | 124 | 1096 | 2506 | 2028 |
| Fiber 18 | 33 | 0.146 | 11.3 | 1513 | 112 | 127 | 1033 | 2548 | 2033 |
| Fiber 19 | 62 | 0.145 | 11.4 | 1499 | 111 | 127 | 1000 | 2521 | 2011 |
| Fiber 20 | 102 | 0.144 | 11.2 | 1479 | 112 | 128 | 1058 | 2540 | 2011 |
| Fiber 21 | 152 | 0.144 | 11.5 | 1480 | 114 | 122 | 1030 | 2573 | 2064 |
| Fiber 22 | 203 | 0.146 | 11.3 | 1485 | 110 | 121 | 1057 | 2549 | 2004 |
| Fiber 23 | 301 | 0.150 | 11.4 | 1472 | 111 | 125 | 1063 | 2599 | 2044 |

FIG. 6 is a graph showing a relationship between a mean potassium concentration of a core and transmission loss. The horizontal axis indicates the mean potassium concentration in the core. The vertical axis indicates transmission loss at a wavelength of 1550 nm. As the mean potassium concentration in the core decreases, the transmission loss deteriorates. This is considered to be because the density fluctuation component of the Rayleigh scattering loss increases due to the insufficient potassium concentration. On the other hand, when the mean potassium concentration in the core is about 300 ppm, an increase in transmission loss occurs. This is considered to be because the concentration fluctuation component of the Rayleigh scattering loss increases.

Table 4 is a table summarizing specifications of six types of optical fibers manufactured and evaluated. This table shows, for each of Fibers 24 to 29, the mean K concentration in the core, the transmission loss ($\alpha 1.55$) at a wavelength of 1550 nm, the core diameter, the cut-off wavelength ($\lambda cc$), the effective cross-sectional area (Aeff), the presence or absence of the OD group, the mean chlorine concentration in the first core, the mean chlorine concentration in the second core, the mean fluorine concentration in the first core, and the mean fluorine concentration in the second core.

[Table 4]

| | Mean K concentration in core [ppm] | $\alpha$1.55 [dB/km] | Core diameter [$\mu$m] | $\lambda$cc [nm] | Aeff [$\mu m^2$] | Presence or absence of OD group | Mean Cl concentration in first core [ppm] | Mean Cl concentration in second core [ppm] | Mean F concentration in first core [ppm] | Mean F concentration in second core [ppm] |
|---|---|---|---|---|---|---|---|---|---|---|
| Fiber 24 | 54 | 0.144 | 11.6 | 1516 | 111 | Present | 129 | 304 | 2594 | 2015 |
| Fiber 25 | 51 | 0.144 | 11.2 | 1501 | 115 | Present | 130 | 501 | 2516 | 2075 |
| Fiber 26 | 51 | 0.145 | 11.5 | 1492 | 113 | Present | 130 | 1011 | 2569 | 2061 |
| Fiber 27 | 51 | 0.148 | 11.1 | 1502 | 112 | Absent | 127 | 299 | 2572 | 2089 |
| Fiber 28 | 53 | 0.145 | 11.5 | 1472 | 110 | Absent | 122 | 554 | 2551 | 2066 |
| Fiber 29 | 52 | 0.144 | 11.3 | 1472 | 112 | Absent | 125 | 1107 | 2598 | 2100 |

For Fibers 24 to 26, a treatment (deuterium ($D_2$) treatment) of exposing the fiber to a deuterium gas atmosphere after the drawing process S11. For Fibers 27 to 29, the $D_2$ treatment was not performed. It was confirmed that an increase in transmission loss occurs when the mean chlorine concentration in the second core is less than 300 ppm. This is considered to be because glass defects occurred.

Table 5 is a table summarizing specifications of 13 types of optical fiber preforms manufactured and evaluated. This table shows, for each of Preforms 1 to 13, the mean K concentration in the core portion, the mean chlorine concentration in the first core portion, the mean chlorine concentration in the second core portion, the mean fluorine concentration in the first core portion, the mean fluorine concentration in the second core portion, and the number of preform abnormalities. The preform abnormality refers to, for example, a portion where a part of glass such as the core portion is crystallized. When the portion having the preform abnormality is drawn, a defect such as unstable fiber diameter may occur due to a difference in thermal expansion coefficient between the glass portion and the crystal portion. The number of preform abnormalities is the number of preform abnormal locations included in one preform. The size of the optical fiber preform is the same in all of Preform 1 to Preform 13.

[Table 5]

| | Mean K concentration in core portion [ppm] | Mean Cl concentration in first core portion [ppm] | Mean Cl concentration in second core portion [ppm] | Mean F concentration in first core portion [ppm] | Mean F concentration in second core portion [ppm] | Number of preform abnormalities |
|---|---|---|---|---|---|---|
| Preform 1 | 44 | 125 | 2511 | 2593 | 2054 | 0 |
| Preform 2 | 44 | 208 | 2578 | 2586 | 2025 | 0 |
| Preform 3 | 41 | 307 | 2587 | 2598 | 2044 | 1 |
| Preform 4 | 43 | 509 | 2557 | 2552 | 2064 | 3 |
| Preform 5 | 43 | 1002 | 2539 | 2554 | 2070 | 4 |
| Preform 6 | 44 | 1504 | 2541 | 2552 | 2094 | 10 |
| Preform 7 | 44 | 205 | 2508 | 1010 | 2071 | 0 |
| Preform 8 | 41 | 202 | 2551 | 1551 | 2075 | 0 |
| Preform 9 | 40 | 205 | 2522 | 2015 | 2014 | 0 |
| Preform 10 | 42 | 207 | 2503 | 2576 | 2023 | 1 |
| Preform 11 | 42 | 206 | 2577 | 3031 | 2062 | 3 |
| Preform 12 | 42 | 210 | 2550 | 4041 | 2070 | 4 |
| Preform 13 | 41 | 202 | 2503 | 5083 | 2042 | 8 |

When the mean chlorine concentration or mean fluorine concentration in the first core portion increases, the number of preform abnormalities increases. It is considered that the preform abnormality is caused by a crystal generated by a compound such as KCl or KF.

**Reference Signs List**

| | |
|---|---|
| 1 | Optical fiber |
| 10 | Core |
| 11 | First core |
| 12 | Second core |
| 20 | Cladding |
| C | Central axis |

**Claims**

**1.** An optical fiber made of silica-based glass, comprising:

a core; and
a cladding circumscribing the core,
wherein a refractive index of the core is larger than a refractive index of the cladding,
the core includes a first core having a central axis and a second core circumscribing the first core,
a mean value of a mass fraction of chlorine in the first core is lower than a mean value of a mass fraction of chlorine in the second core,
a mean value of a mass fraction of fluorine in the first core is higher than a mean value of a mass fraction of fluorine in the second core,
a total value of the mean value of the mass fraction of chlorine and the mean value of the mass fraction of fluorine in the second core is 5000 ppm or less, and
the core includes either or both of an alkali metal element and an alkaline earth metal element.

**2.** The optical fiber according to claim 1, wherein
the mean value of the mass fraction of chlorine in the first core is 10 ppm or greater and 500 ppm or less.

**3.** The optical fiber according to claim 1 or 2, wherein
the mean value of the mass fraction of chlorine in the second core is 500 ppm or greater and 3000 ppm or less.

**4.** The optical fiber according to any one of claims 1 to 3, wherein
the mean value of the mass fraction of fluorine in the first core is 500 ppm or greater and 4000 ppm or less.

**5.** The optical fiber according to any one of claims 1 to 4, wherein
the mean value of the mass fraction of fluorine in the second core is 500 ppm or greater and 4000 ppm or less.

**6.** The optical fiber according to any one of claims 1 to 5, wherein
a total mean value of mass fractions of the alkali metal element and the alkaline earth metal element in the core is 0.2 ppm or greater and 200 ppm or less.

**7.** The optical fiber according to claim 6, wherein
the total mean value of mass fractions of the alkali metal element and the alkaline earth metal element in the core is 30 ppm or greater.

**8.** The optical fiber according to any one of claims 1 to 7, wherein
the core includes any one of sodium, potassium, rubidium, cesium, and calcium as the alkali metal element or the alkaline earth metal element.

**9.** The optical fiber according to any one of claims 1 to 8,

not comprising an OD group.

**10.** The optical fiber according to any one of claims 1 to 9, wherein a difference between a mean value of a mass fraction of fluorine in the cladding and the mean value of the mass fraction of fluorine in the second core is 8400 ppm or greater.

**11.** The optical fiber according to any one of claims 1 to 10, wherein the difference between the mean value of the mass fraction of fluorine in the cladding and the mean value of the mass fraction of fluorine in the second core is 8600 ppm or greater and 9000 ppm or less.

**12.** The optical fiber according to any one of claims 1 to 11, wherein the mean value of the mass fraction of fluorine in the cladding is 8000 ppm or greater and 13000 ppm or less.

**13.** An optical fiber preform made of silica-based glass, comprising:

a core portion; and
a cladding portion circumscribing the core portion,
wherein a refractive index of the core portion is larger than a refractive index of the cladding portion,
the core portion includes a first core portion having a central axis and a second core portion circumscribing the first core portion,
a mean value of a mass fraction of chlorine in the first core portion is lower than a mean value of a mass fraction of chlorine in the second core portion,
a mean value of a mass fraction of fluorine in the first core portion is higher than a mean value of a mass fraction of fluorine in the second core portion,
a total value of the mean value of the mass fraction of chlorine and the mean value of the mass fraction of fluorine in the second core portion is 5000 ppm or less, and
the core portion includes either or both of an alkali metal element and an alkaline earth metal element.

**14.** The optical fiber preform according to claim 13, wherein the mean value of the mass fraction of chlorine in the first core portion is 1000 ppm or less.

**15.** The optical fiber preform according to claim 13 or 14, wherein the mean value of the mass fraction of fluorine in the first core portion is 5000 ppm or less.

*Fig.1*

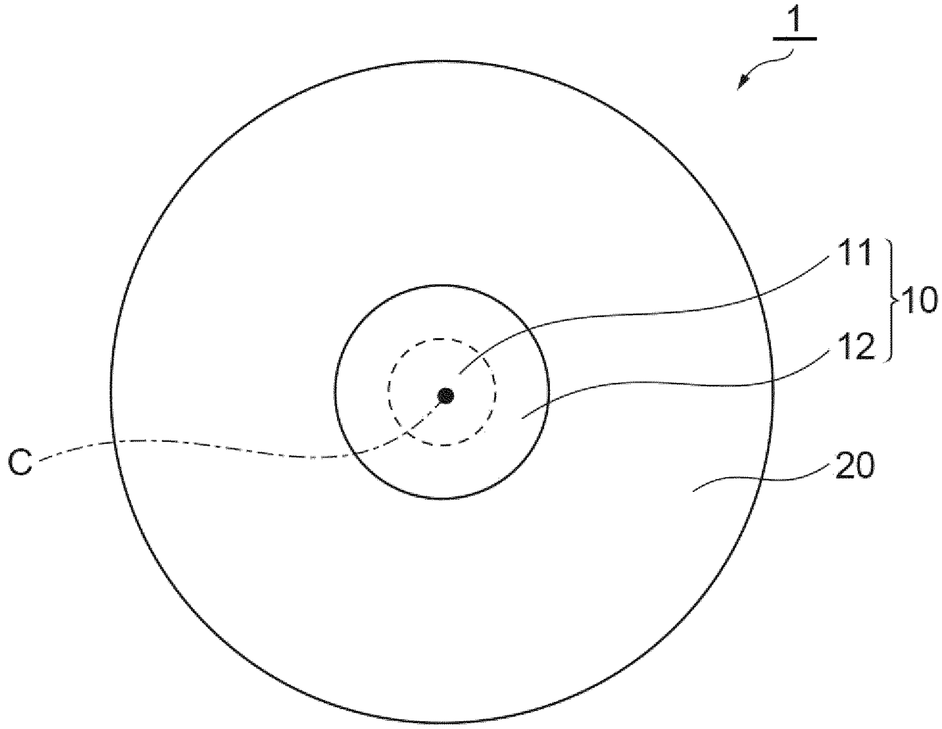

Fig.2

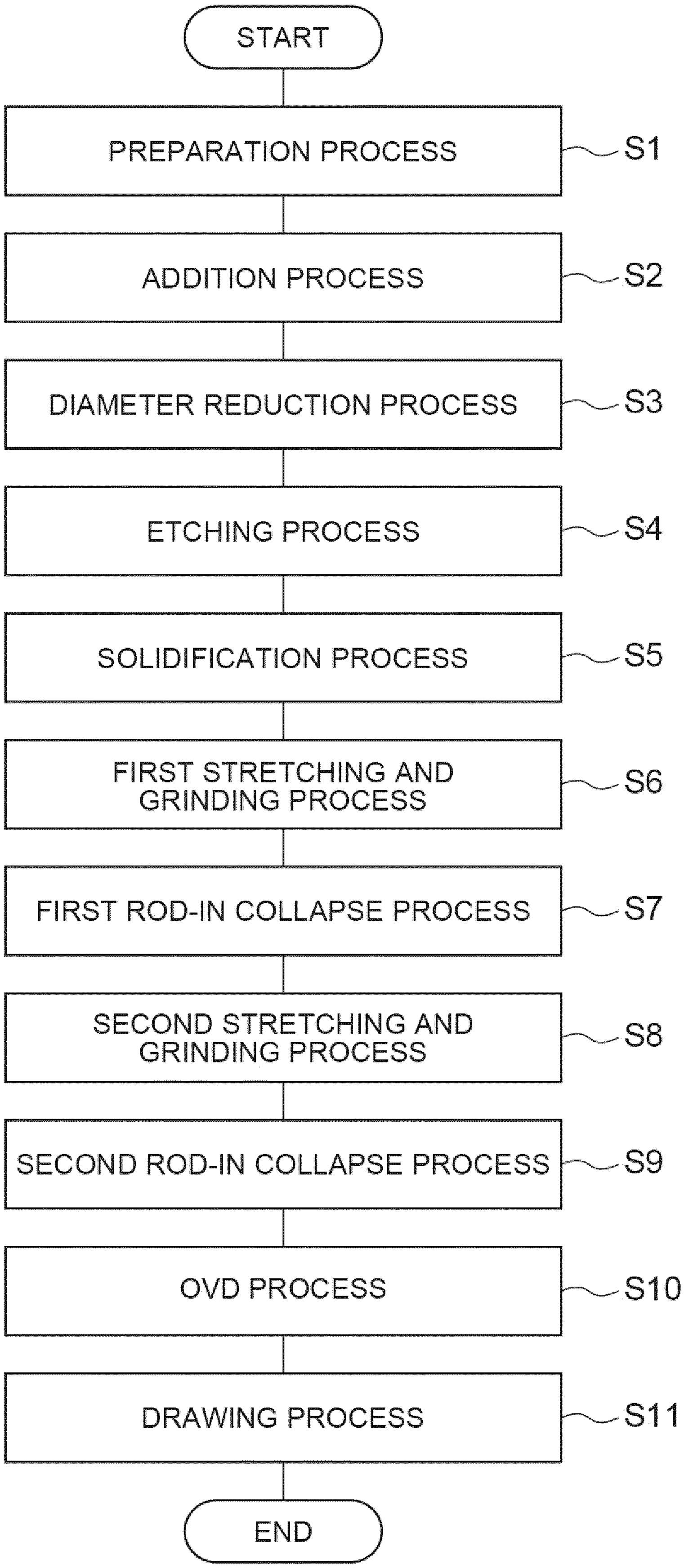
START
PREPARATION PROCESS
S1
ADDITION PROCESS
S2
DIAMETER REDUCTION PROCESS
S3
ETCHING PROCESS
S4
SOLIDIFICATION PROCESS
S5
FIRST STRETCHING AND GRINDING PROCESS
S6
FIRST ROD-IN COLLAPSE PROCESS
S7
SECOND STRETCHING AND GRINDING PROCESS
S8
SECOND ROD-IN COLLAPSE PROCESS
S9
OVD PROCESS
S10
DRAWING PROCESS
S11
END

*Fig.3*

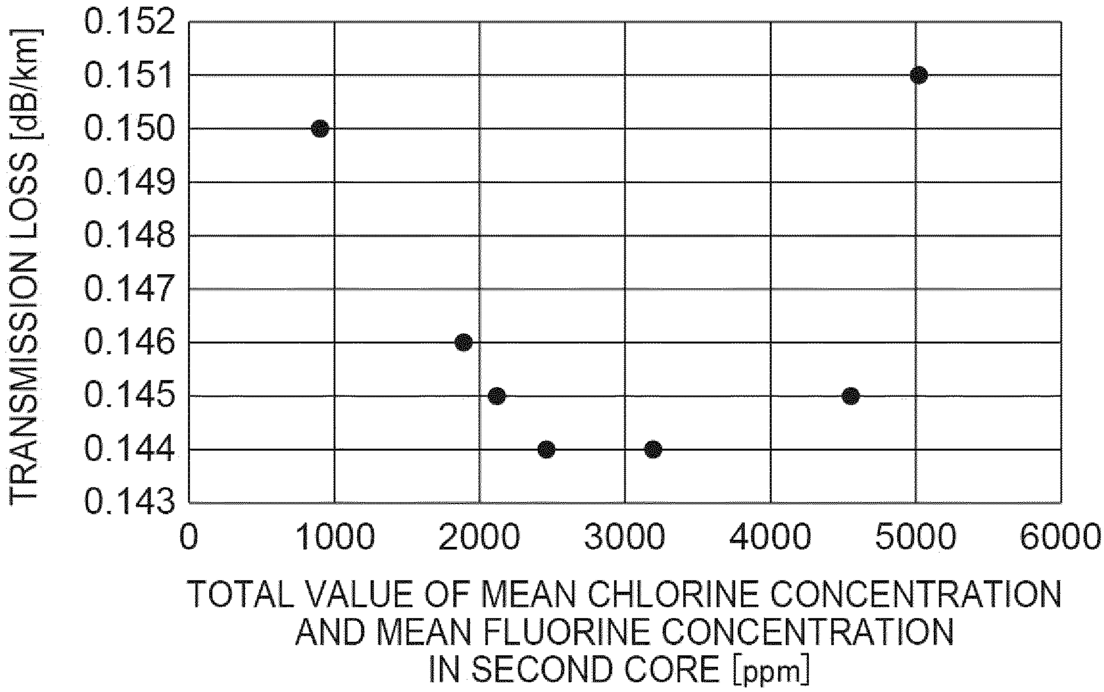
TRANSMISSION LOSS [dB/km]
0.152
0.151
0.150
0.149
0.148
0.147
0.146
0.145
0.144
0.143
0
1000
2000
3000
4000
5000
6000
TOTAL VALUE OF MEAN CHLORINE CONCENTRATION AND MEAN FLUORINE CONCENTRATION IN SECOND CORE [ppm]

*Fig.4*

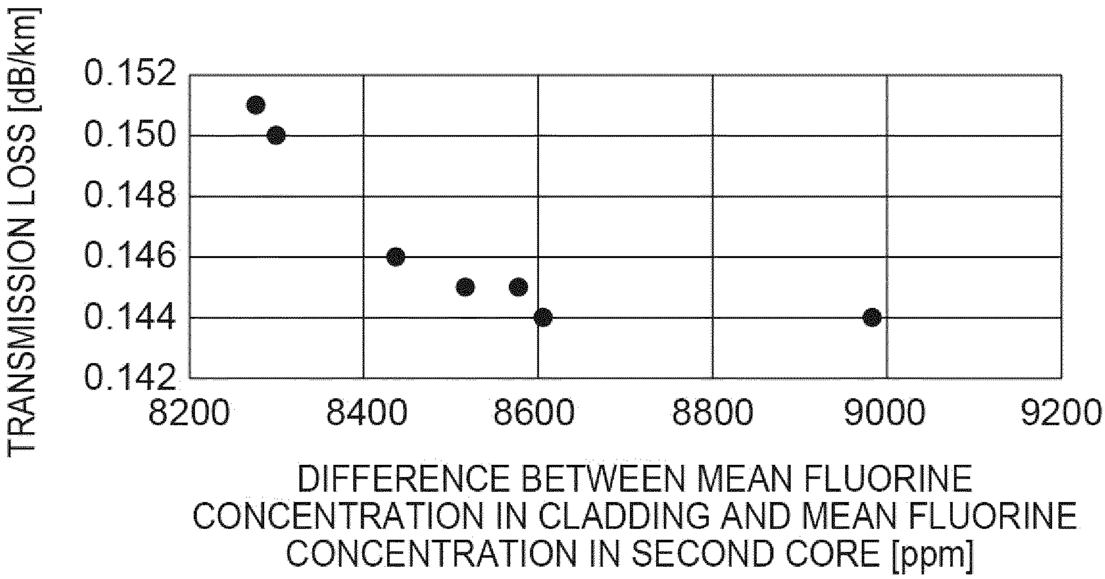
TRANSMISSION LOSS [dB/km]
0.152
0.150
0.148
0.146
0.144
0.142
8200
8400
8600
8800
9000
9200
DIFFERENCE BETWEEN MEAN FLUORINE CONCENTRATION IN CLADDING AND MEAN FLUORINE CONCENTRATION IN SECOND CORE [ppm]

*Fig.5*

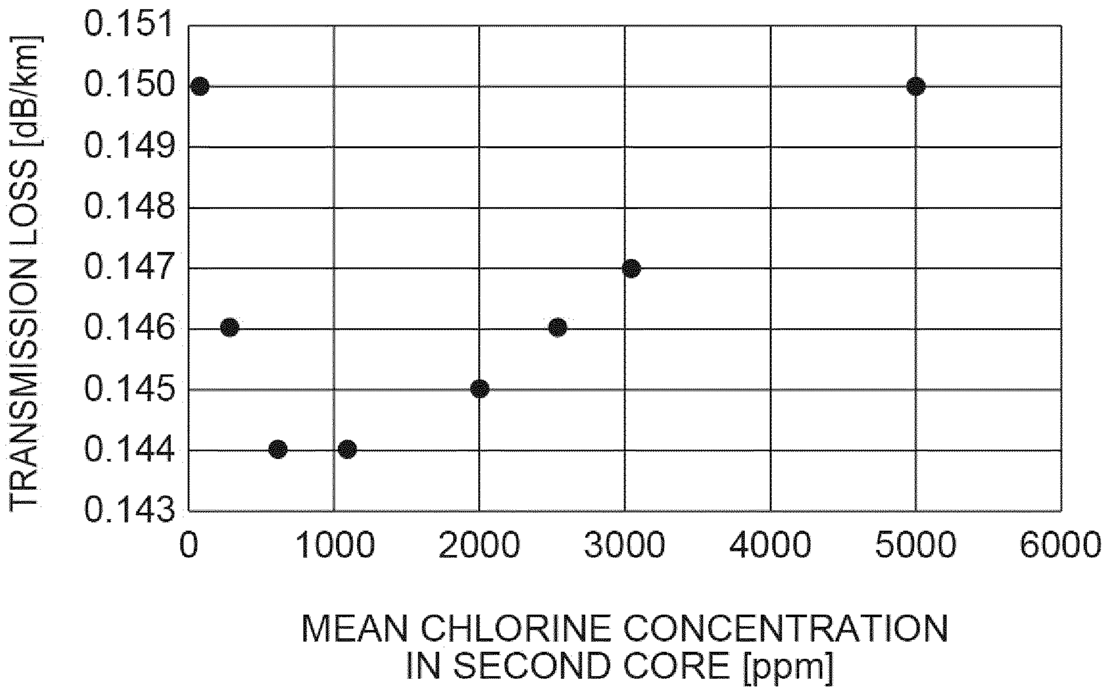
TRANSMISSION LOSS [dB/km]
0.151
0.150
0.149
0.148
0.147
0.146
0.145
0.144
0.143
0
1000
2000
3000
4000
5000
6000
MEAN CHLORINE CONCENTRATION
IN SECOND CORE [ppm]

*Fig.6*

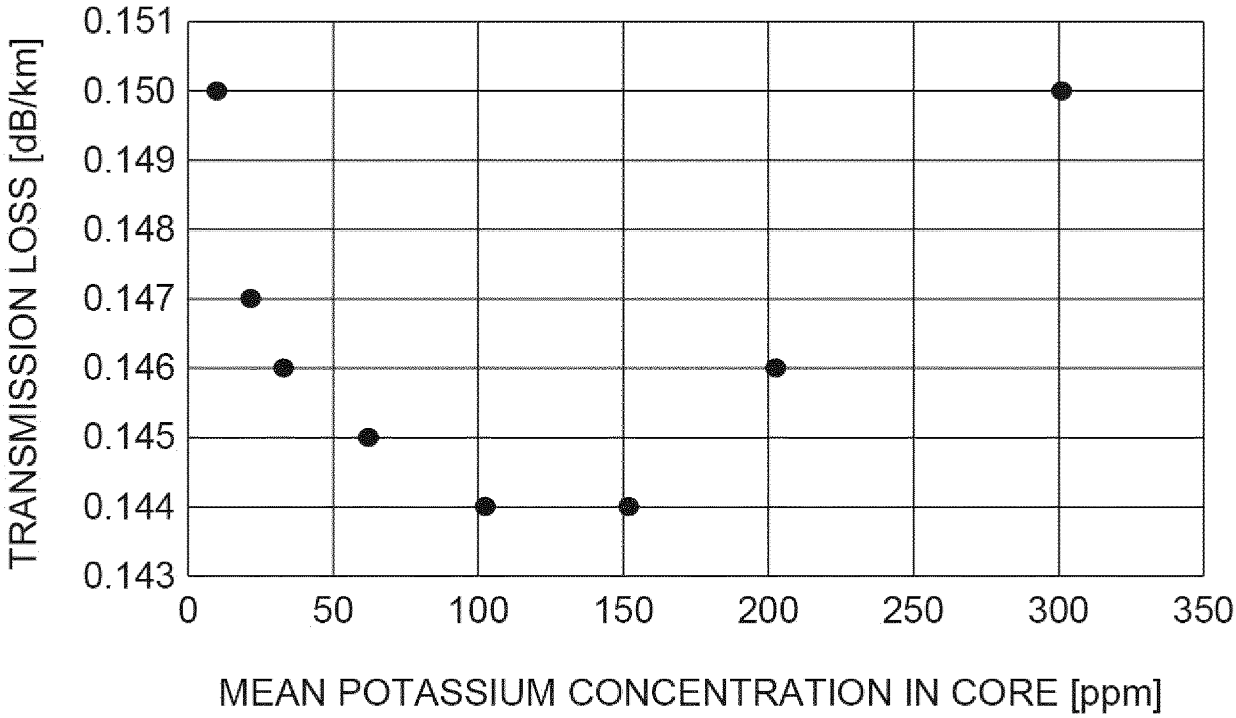
0.151
0.150
0.149
0.148
0.147
0.146
0.145
0.144
0.143
TRANSMISSION LOSS [dB/km]
0
50
100
150
200
250
300
350
MEAN POTASSIUM CONCENTRATION IN CORE [ppm]

## INTERNATIONAL SEARCH REPORT

International application No.
**PCT/JP2022/025961**

### A. CLASSIFICATION OF SUBJECT MATTER

***G02B 6/036***(2006.01)i; ***C03C 13/04***(2006.01)i; ***G02B 6/02***(2006.01)i
FI: G02B6/036 501; G02B6/02 376A; G02B6/02 356A; C03C13/04

According to International Patent Classification (IPC) or to both national classification and IPC

### B. FIELDS SEARCHED

Minimum documentation searched (classification system followed by classification symbols)

G02B6/02-6/08; C03C1/00-14/00; C03B37/00-37/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2007-504080 A (CORNING INCORPORATED) 01 March 2007 (2007-03-01) paragraphs [0050], [0094]-[0097], fig. 25, 31-32 | 1-4, 6-15 |
| X | JP 2009-541796 A (CORNING INCORPORATED) 26 November 2009 (2009-11-26) paragraphs [0015]-[0044], fig. 1-6 | 1-15 |
| A | US 2014/0241684 A1 (CORNING INCORPORATED) 28 August 2014 (2014-08-28) paragraphs [0044]-[0046], fig. 1-3 | 1-15 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **29 August 2022** | **13 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/025961**

| Patent document cited in search report | Publication date (day/month/year) | Patent family member(s) | Publication date (day/month/year) |
|---|---|---|---|
| JP 2007-504080 A | 01 March 2007 | US 2005/0063663 A1<br>paragraphs [0087], [0131]-[0133], fig. 25, 31-32<br>CN 1842499 A<br>KR 10-2006-0123712 A | |
| JP 2009-541796 A | 26 November 2009 | US 2007/0297735 A1<br>paragraphs [0021]-[0047], fig. 1-6<br>KR 10-2009-0024271 A<br>CN 101495893 A | |
| US 2014/0241684 A1 | 28 August 2014 | WO 2014/134103 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021117840 A
- JP 2009541796 A
- JP 2017076053 A
- JP 2019191297 A